# EUROPEAN PATENT APPLICATION

(11) **EP 1 757 848 A1**
(43) Date of publication of application: **28.02.2007**
(21) Application number: 05741573.9
(22) Date of filing: 19.05.2005
(51) Int. Cl.: F16J 13/14

(54) **HOLE PLUG**

(30) Priority: 24.05.2004 JP 2004153438
(71) Applicant: DAIWA KASEI KOGYO KABUSHIKI KAISHA, Okazaki-shi, Aichi-ken (JP)
(72) Inventor: IWAHARA, T. DAIWA KASEI KOGYO KABUSHIKI KAISHA 1, Okazaki-shi Aichi 4440004 (JP)
(74) Representative: Pratt, David Martin
(86) International application number: PCT/JP2005/009149
(87) International publication number: WO 2005/114011

(57) **Abstract**

A hole plug (10) for closing a through-hole (41) formed in a compartment wall (40) may include an attaching portion (30) formed from a synthetic resin and a cover portion (20) integrated with the attaching portion at a central portion (22) thereof. The attaching portion can be inserted into the through-hole so as to engage the inner surface (43) of the compartment wall. The cover portion has a size and shape that can enclose the through-hole and has a peripheral edge portion (21) that can closely contact the outer surface (44) of the compartment wall. The cover portion has a thickened portion (21a) that is formed in the peripheral edge portion thereof or in a vicinity of the peripheral edge portion and that can maintain a size and configuration of the peripheral edge portion when an external force is applied to the cover portion. The cover portion has a thinned portion (23a) that is formed between the thickened portion (21a) and the central portion (22) integrated with the attaching portion (30) and that can undergo elastic buckling deformation when an external force is applied thereto.

## Description

### Technical Field

The present invention relates to hole plugs. More specifically, the present invention relates to hole plugs for sealing through-holes that are formed in various portions of a structure of a vehicle such as an automobile and which through-holes are otherwise left open without being used.

### Background Art

A hole plug of this type is inserted into a through-hole, which is formed in a portion (e.g., a compartment wall) of a vehicle body or the like at the time of the production thereof and is otherwise left open without being used, to thereby seal the through-hole. Therefore, when the hole plug is to be applied to a through-hole formed in a portion (e.g., an inner panel) of a door that separates a vehicle interior from a vehicle exterior, the hole plug has to be designed so as to have a desired sealing performance such that rainwater, dust or other such material is prevented from entering the vehicle interior through the through-hole.
The structure of the hole plug will be described hereinafter. The hole plug has a cylindrical attaching portion that is constructed to be fitted into a circular through-hole, and a dish-shaped cover portion integrally formed at a base portion of the attaching portion. In such a hole plug, the attaching portion and the cover portion can be integrally formed from an elastomer which has a superior elasticity and sealing property. Alternately, the attaching portion and the cover portion can be separately formed and then integrated with each other by bonding. In such a case, the attaching portion and the cover portion can respectively be formed from a synthetic resin and an elastomer. These examples of the hole plug will be briefly described below.
First, in the former type of hole plug, which is integrally formed from an elastomer, a forward end portion of the attaching portion is formed in a truncated umbrella-shape so as to protrude outwardly. More specifically, it is formed so as to have a diameter greater than the diameter of the through-hole. Conversely, the cover portion is formed as a truncated reverse umbrella-shape opposite to the umbrella-shape of the attaching portion. Therefore, when the truncated umbrella-shaped forward end portion of the attaching portion is forced into the through-hole in use, the portion of the attaching portion is inserted thereinto while being squeezed and narrowed. The forward end portion of the attaching portion is outwardly restored or spread after passing through the through-hole, and engages the inner surface of the panel around the periphery of the through-hole. Also, depending upon the inserting operation of the attaching portion, the reverse umbrella-shaped cover portion is forced onto the outer surface of the panel and is spread thereon. The spread reverse umbrella-shaped cover portion exerts an adhesion force on the outer surface of the panel around the periphery of the through-hole. This is because an elastic force (a repulsive force) is generated due to the engagement of the attaching portion and the inner surface of the panel. That is, such an adhesion force is generated according to the elastic force due to the mutual action of the umbrella-shaped attaching portion and the reverse umbrella-shaped cover portion.
Next, in the latter type of hole plug, a forward end portion of the attaching portion formed from the synthetic resin has outwardly projected engagement claws that are formed in the side surface (the circumferential surface) thereof. The engagement claws are formed so as to outwardly project beyond the diameter of the through-hole. Further, because the cover portion has substantially the same construction as the cover portion of the former type of hole plug, the description thereof will be omitted. Therefore, when the hole plug thus constructed is forced into the through-hole, the engagement claw elastically engages the inner surface of the panel around the periphery of the through-hole. In this case, the spread reverse umbrella-shaped cover portion exerts an adhesion force on the outer surface of the panel around the periphery of the through-hole due to the elastic force (the repulsive force) thereof.
A related technique is taught by Patent Document 1 described below.

Patent Document 1: Japanese Laid-Open Utility Model Publication No. 61-202757

### Disclosure of the Invention

### Problems to be Solved by the Invention

However, in the above conventional devices, when the hole plug is attached to the panel, often times, the attaching portion cannot be readily inserted into the through-hole and reliably engage the panel. Further, in some cases, the hole plug of this type cannot provide sufficient sealing performance (waterproof property and dustproof property). Further, when the hole plug is attached, the diameter of a sealing area of the cover portion may be excessively increased.
For example, in the former type of hole plug of the above described conventional examples (in which the hole plug is integrally formed of elastomer), the cover portion is formed of elastomer that has a relatively low rigidity. Therefore, when the worker inserts the umbrella-shaped portion of the attaching portion into the through-hole of the panel, the worker cannot have a crisp actual engagement feeling as to whether the umbrella-shaped portion is restored in the through-hole (as to whether the portion is reliably engaged to the panel inner surface). Thus, it is impossible to crisply feel as to whether the attaching portion has been completely inserted. As a result, it is necessary to repeatedly apply an additional force to the attaching portion along the inserting direction. In some cases, it is necessary to redo the inserting operation of the attaching portion.
Also, in the case of the latter type of hole plug, the cover portion is formed from synthetic resin. Therefore, due to the rigidity of the synthetic resin, it is possible to have the crisp actual engagement feeling to some degree when the attaching portion is inserted into the through-hole. However, in this case, even if the attaching portion engages the panel inner surface, the attaching portion does not generate any elastic force (repulsive force) for bringing the umbrella-shaped cover portion into close contact with the panel outer surface. As a result, it is necessary, for example, to provide the umbrella-shaped cover portion with a double-seal structure or to axially elongate the umbrella-shaped cover portion so that the umbrella-shaped cover portion may exert an adhesion force (sealing performance) on the panel outer surface. However, according to the cover portion thus shaped, when the attaching portion is inserted into the through-hole, the elastic force acting on the umbrella-shaped of cover portion (the repulsive force again an insertion force of the hole plug) increases due to the structure of the cover portion. Therefore, it is difficult to insert the attaching portion into the through-hole. In addition, if the umbrella-shaped cover portion is elongated, an extent of the cover portion (the diameter of the sealing area of the cover portion) may be unnecessarily increased when the hole plug is attached to the panel. Consequently, such a hole plug cannot be used in a place where there is not a sufficient space for the hole plug.

The present invention has been made to solve the above problems. It is one object of the present invention to provide hole plugs which can be easily attached with an appropriate crisp actual engagement feeling without losing the sealing performance thereof and in which extents of cover portions can be effectively reduced when the hole plugs are in used.

### Means for Solving the Problems

The hole plug of the present invention is constructed as follows.
First, according to a first invention, a hole plug for closing a through-hole formed in a compartment wall includes an attaching portion formed from a synthetic resin, and a cover portion integrated with the attaching portion at a central portion thereof. The attaching portion can be inserted into the through-hole so as to engage one surface of the compartment wall. The cover portion has a size and shape that can enclose the through-hole, and has a peripheral edge portion that can closely contact the other surface of the compartment wall. The cover portion has a configuration maintaining means that is formed in the peripheral edge portion thereof or in a vicinity of the peripheral edge portion and that can maintain a size and configuration of the peripheral edge portion when an external force is applied to the cover portion. The cover portion has an elastic force imparting means that is formed between the configuration maintaining means and the central portion integrated with the attaching portion and can undergo elastic buckling deformation when the external force is applied thereto. The peripheral edge portion of the cover portion is capable of closely contacting the other surface of the compartment wall by means of the elastic force imparting means.
The configuration maintaining means may be formed such that a sliding frictional force can be produced between the peripheral edge portion of the cover portion and the other side surface of the compartment wall so as to restrict the movement of the cover portion relative to the compartment wall. Also, the configuration maintaining means may be formed by appropriately selecting the shape and the material of the peripheral edge portion or the portion in the vicinity of the peripheral edge portion such that the portion may have an increased deformation resistance against a compression force (an increased hoop stress).
According to the first invention, when the compression force is applied to the attaching portion for inserting the attaching portion into the through-hole, the peripheral edge portion of the cover portion closely contacts the other surface of the compartment wall. At this time, the size and configuration of the peripheral edge portion or the portion in the vicinity of the peripheral edge portion are maintained by means of the configuration maintaining means if an external force is applied to the cover portion. Thus, the portion formed with the configuration maintaining means is securely positioned so as to closely contact the other surface. As a result, such a portion is not expanded by the external force. Conversely, the portion between the configuration maintaining means and the central portion integrated with the attaching portion is bent inwardly with respect to the portion formed with the configuration maintaining means when the external force is applied thereto. The bending is a result of the elastic force imparting means while undergoing elastic buckling. Due to the elastic force caused by this bending, the peripheral edge portion of the cover portion may closely contact the other surface of the compartment wall.

Next, according to a second invention, in the above-described first invention, the cover portion is formed of elastomer, and a portion formed with the configuration maintaining means has a thickness greater than a portion formed with the elastic force imparting means.
According to the second invention, the cover portion is integrally formed of elastomer as a unit. Further, the portion formed with the configuration maintaining means is thickened. Therefore, such a portion can increas the deformation resistance (an increased hoop stress), more so than a portion formed with the elastic force imparting means. Therefore, the external force can be easily concentrated to the portion formed with the elastic force imparting means.

Next, according to a third invention, in the above-described second invention, the thickened portion formed of elastomer and formed with the configuration maintaining means has a double seal structure having a V-shaped cross-sectional configuration.
According to the third invention, the portion formed with the configuration maintaining means of the cover portion has the V-shaped configuration in cross section. Therefore, it is possible to reliably keep a sealing posture with respect to the other surface (contact surface) of the compartment wall. Accordingly, the elastic force can stably contact the other surface. Further, the double seal structure may increase sealing performance of the cover portion.

### Effects of the Invention

The present invention may provide the following effects.
First, according to the first invention, when the hole plug is inserted into the through-hole, the peripheral edge portion of the cover portion is not widened (i.e., is not outwardly expanded). Therefore, the diameter of a sealing area of the cover portion can be reduced. Further, as the hole plug is inserted into the through-hole, the cover portion is deformed while undergoing elastic buckling. Thus, the force required for inserting the hole plug may be reduced. Also, due to the change in the elastic force caused by the elastic buckling, an appropriate crisp actual engagement feeling can be obtained. As a result, the attaching operation of the hole plug can be facilitated.
Next, according to the second invention, the cover portion can be formed by the integral molding of elastomer. Therefore, the second invention may have increased sealing performance in addition to the effect of the first invention.
Next, according to the third invention, due to the elastic repulsive force generated in the cover portion, the peripheral edge portion of the cover portion may stably contact the other surface of the compartment wall. Therefore, the sealing performance can be stabilized.

### Brief Description of the Drawings

FIG. 1 is a perspective view of a hole plug according to a first embodiment of the present invention.
FIG. 2 is a cross-sectional view of the hole plug, which illustrates a condition before the hole plug is inserted into a through-hole formed in a compartment panel.
FIG. 3 is a cross-sectional view of the hole plug, which illustrates a condition after the hole plug is inserted into the through-hole formed in the compartment panel.
FIG. 4 is a perspective view of a hole plug according to a second embodiment of the present invention.
**FIG. 5** is a cross-sectional view of the hole plug, which illustrates an attaced condition.
FIG. 6 is an enlarged cross-sectional view of the hole plug, which illustrates waterproof function of the hole plug.
FIG. 7 is a front view of a hole plug according to a third embodiment of the present invention.
FIG. 8 is a plan view of FIG. 7.
FIG. 9 is a right-hand side view of FIG. 7.
FIG. 10 is a cross-sectional view taken along line A-A of FIG. 7.
**FIG. 11** is a cross-sectional view taken along line B-B of FIG. 7.
FIG. 12 is a cross-sectional view of the hole plug that is in use.

### Best Mode for Carrying Out the Invention

Detailed representative embodiments of the present invention are described with reference to the drawings.

### First Embodiment

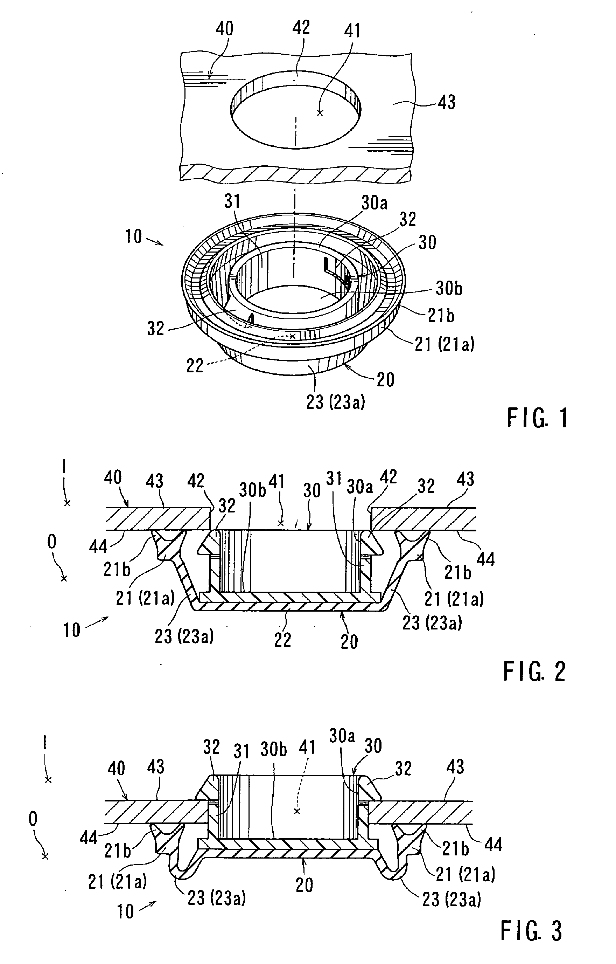

FIGS. 1 to 3 show a hole plug 10 according to a first embodiment of the present invention. FIG. 1 is a perspective view of the hole plug 10. FIG. 2 is a cross-sectional view of the hole plug 10, which illustrates a condition before the hole plug 10 is inserted into a through-hole 41 formed in a compartment wall or panel 40. FIG. 3 is a cross-sectional view of the hole plug 10, which illustrates a condition after the hole plug 10 is inserted into the through-hole 41 formed in the compartment panel 40. Further, in FIGS. 2 and 3, references I and 0 respectively indicate inner and outer sides of the compartment panel 40.
It is noted that an example of the compartment panel 40 is a door panel of a vehicle. Also, the through-hole 41 corresponds to one of the through-holes that are formed in the compartment panel 40 at the time of the production thereof and the through-hole is otherwise left open without being used. The hole plug 10 is intended to be inserted into the through-hole 41 so as to seal the through-hole 41.
As best shown in FIG. 1, the hole plug 10 is composed of an attaching portion 30 formed from a synthetic resin as a bottomed cylindrical member, and a cover portion 20 integrated with a base 30b of the attaching portion 30 and having a truncated-umbrella-shape.

More specifically, as best shown in FIGS. 1 and 2, the bottomed cylindrically-shaped attaching portion 30 is opened at an upper or forward end 30a. The base 30b of the attaching portion 30 is closed and is integrated with the cover portion 20. Further, a cylindrical body portion 31 of the attaching portion 30 is circumferentially formed with outwardly projecting engagement claws 32 adjacent to the forward end 30a. Further, the engagement claws 32 are formed by forming cutout portions or slots in the cylindrical body portion 31. More specifically, the engagement claws 32 are formed so as to protrude beyond the diameter of the through-hole 41 of the compartment panel 40.
Thus, when the attaching portion 30 of the hole plug 10 is forced through the through-hole 41 from the forward end 30a (so as to be inserted thereinto toward the inner side I of the compartment panel 40), the attaching portion 30 is elastically narrowed as a result of the engagement claws 32 abutting a circumferential wall surface 42 of the through-hole 41 of the compartment panel 40. Then, as best shown in FIG. 3, when the attaching portion 30 is further inserted so that the engagement claws 32 pass through the through-hole 41 and completely reach the inner side I, the engagement claws 32 are elastically restored or expanded so as to engage an inner surface 43 of the panel 40. Thus, the attaching portion 30 is coupled to the through-hole 41 so as be in an engagement condition (a locking condition) in which it is prevented from being detached therefrom. It is noted that the inner surface 43 corresponds to one surface in the claimed invention.

Next, the cover portion 20 is formed from an elastomer which may be a material having a superior elasticity and sealing property. As best shown in FIGS. 1 and 2, the cover portion 20 has a truncated umbrella-shaped peripheral edge portion 21 that radially extends from a central portion 22 of the cover portion 20. The cover portion 20 has a size and configuration that can enclose the through-hole 41. Further, the central portion 22 is integrally bonded to the base 30b of the attaching portion 30.

More specifically, the peripheral edge portion 21 of the cover portion 20 includes a thickened portion 21a which has a thickness greater than the thickness of an umbrella-shaped side portion 23. It is noted that the thickened portion 21a corresponds to a configuration maintaining means of the claimed invention. Because the peripheral edge portion 21 of the cover portion 20 is thicker than the side portion 23, when the attaching portion 30 is inserted into the through-hole 41 (so that a compressive force, or an external force, is exerted on the cover portion 20), the hoop stress acting on the peripheral edge portion 21 (thickened portion 21a) is increased. Therefore, even if the cover portion 20 is applied with the external force, the configuration of the peripheral edge portion 21 is maintained.
Further, the thickened portion 21a of the peripheral edge portion 21 is formed with a seal portion 21b having a V-shaped cross-sectional configuration. More specifically, as best shown in FIG. 2 and 3, when the external force is applied in order to insert the attaching portion 30 into the through-hole 41, the seal portion 21b comes into contact with an outer surface 44 of the compartment panel 40, thereby exerting an adhesion force thereto. More specifically, the V-shaped contact portion generates a sustaining force so as to keep a desired sealing posture of the cover portion 20 when the external force is exerted thereto. Further, a double-sealing structure is formed so that the sealing performance can be increased. This is because the contact portion of the seal portion 21b has a V-shaped cross section so that the sealing performance can be effectively performed. It is noted that the outer side surface 44 corresponds to the other surface in the claimed invention.

Conversely, the side portion 23 of the cover portion 20 is formed with a thinned portion 23a that has a thickness thinner than the thickness of the peripheral edge portion 21. In other words, when the above-mentioned external force is exerted on the cover portion 20, the thinned portion 23a can more easily deform than the thickened portion 21a of the peripheral edge portion 21. Therefore, this external force is concentrated on the side portion 23 rather than the peripheral edge portion 21 such that the side portion 23 can be greatly deformed. It is noted that the thinned portion 23a corresponds to an elastic force imparting means in the claimed invention.

Next, a function of the attaching portion 30 and the cover portion 20 during an attaching operation of the hole plug 10 will be specifically described with reference to FIGS. 2 and 3.
First, as best shown in FIG. 2, when an external force in order to insert the attaching portion 30 into the through-hole 41 is applied, the peripheral edge portion 21 of the cover portion 20 closely contacts the outer side surface 44 of the compartment panel 40. More specifically, the seal portion 21b formed in the peripheral edge portion 21 and having a V-shaped cross section closely contacts the outer side surface 44, thereby forming a double seal. At this time, if the external force is further applied to the cover portion 20, the size and configuration of the peripheral edge portion 21 can be maintained due to the thickened portion 21a. Therefore, the peripheral edge portion 21 can be securely seated or positioned at the location where the peripheral edge portion 21 originally contacts the outer surface 44 of the compartment panel 40. Thus, the cover portion 20 can be prevented from expanding along the outer surface 44.
Consequently, this external force is concentrated on the side portion 23 of the cover portion 20. More specifically, as best shown in FIG. 3, the side portion 23 is thinner and longer than the peripheral edge portion 21. Therefore, when the external force is applied to the positioned peripheral edge portion 21 from an offset position, the side portion 23 receives a large bending force. As a result, the side portion 23 is bent inwardly while undergoing local elastic buckling. Thus, due to this elastic buckling, the force required for inserting the hole plug 10 is reduced.
Further, at this time, the side portion 23 is applied with an elastic force (a restoring force) corresponding to the elastic deformation due to the bending thereof. This elastic force acts such that the peripheral edge portion 21 of the cover portion 20 is brought into close contact with the outer side surface 44 of the compartment panel 40. Further, due to this elastic force, the seal portion 21b, having a V-shaped cross-sectional configuration and formed on the cover portion 20, provides a resisting force against a force that causes the peripheral edge portion 21 to move along the outer surface 44.
Then, when the engagement claw 32 passes through the through-hole 41 and is elastically expanded the attaching portion 30 engages the inner surface 43 so as to exert an engagement force that acts against the above-mentioned elastic force. Thus, the peripheral edge portion 21 of the cover portion 20 is held in a condition in which it closely contacts the outer surface 44 of the compartment panel 40.

Subsequently, a method of using the hole plug 10 of this embodiment will be described with reference to FIGS. 2 and 3.
First, the attaching portion 30 of the hole plug 10 is forced into the through-hole 41 from the forward end 30a so as to be inserted toward the inner side I. As a result, as best shown in FIG. 2, the peripheral edge portion 21 of the cover portion 20 is brought into close contact with the outer surface 44 of the compartment panel 40. Thereafter, when the attaching portion 30 is further pressed toward the inner side I, the peripheral edge portion 21 of the cover portion 20 is securely positioned on the outer surface 44 without being expanded along the outer surface 44, and the side portion 23 is bent inwardly while undergoing elastic buckling. That is, the elastic force (the repulsive force) acting on the cover portion 20 is reduced. At this time, a worker attaching the hole plug 10 can feel this change in the elastic force (the repulsive force) as a desired crisp actual engagement feeling. Therefore, when the attaching portion 30 is inserted until it engages the inner surface 43 of the compartment panel 40, the hole plug 10 is fitted into the through-hole 41 so that the inner side I is brought into a sealing condition.

When the hole plug 10 of this embodiment is inserted into the through-hole 41, the peripheral edge portion 21 of the cover portion 20 is maintained at, a desired position, so that the diameter of a sealing area of the cover portion 20 can be reduced. Further, as the hole plug 10 is inserted into the through-hole 41, the cover portion 20 is deformed while undergoing elastic buckling. Therefore, the force required for inserting the hole plug 10 may be reduced. Also, due to the change in the elastic force caused by the elastic buckling, an appropriate or actual crisp feeling of engagement can be obtained. As a result, the attaching operation of the hole plug 10 can be facilitated.
Further, the cover portion 20 is integrally formed from the elastomer and has a thickened peripheral edge portion 21 and a thinned side portion 23. The above-mentioned effect can be obtained by simple construction described above. Moreover, due to the seal portion 21b being formed in the cover portion 20 and having a V-shaped cross-sectional configuration, the adhesion contact force can be stably exerted on the outer surface 44 of the compartment panel 40. As a result, sealing performance can be stably generated.

### Second Embodiment

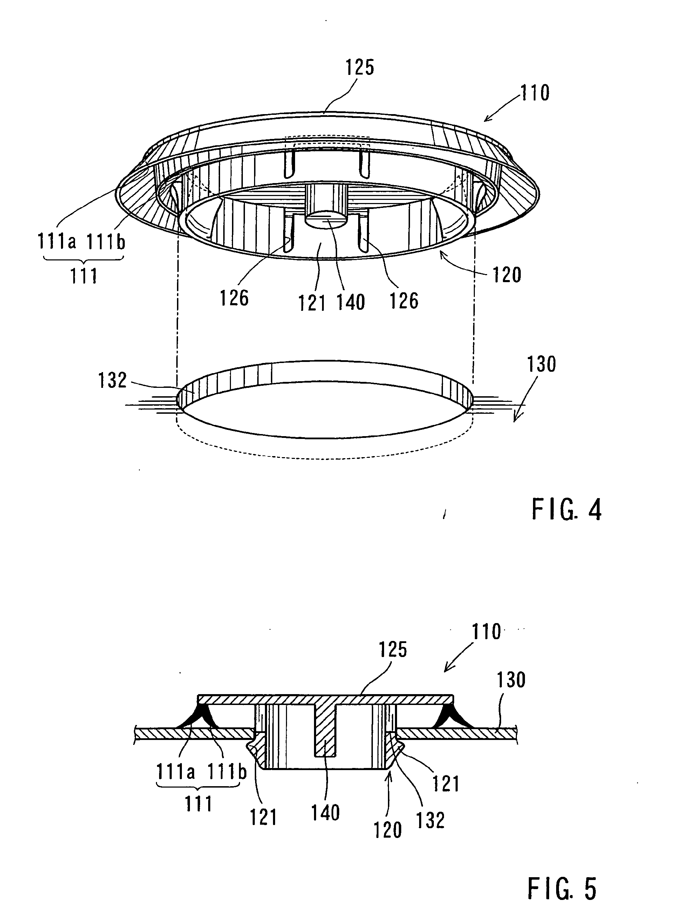

A second detailed representative embodiment of the present invention is described with reference to FIGS. 4 and 5.
FIG. 4 is a perspective view of a hole plug 110. FIG. 5 is a cross-sectional view of the hole plug 110, which illustrates a condition after the hole plug 110 is attached.
As shown in FIGS. 4 and 5, the body member 130 is formed as a plate-shaped member. In this embodiment, the hole 132 is formed as a round hole. An example of the body member 130 is an outer plate of an automobile. Further, the hole 132 formed in this outer plate is one of the holes that is intended for use as flow holes for coating material during coating operations and as operation holes for mounting components. Such a hole 132 is required when the automobile is manufactured. However, once the manufacturing operation of the automobile is completed, the hole 132 provides no further function at all and thus is unnecessary. Generally, the hole 132 is closed after it becomes unnecessary. The hole plug 110 is intended to be inserted into the hole 132 so as to close the hole 132. The hole plug 110 may have a waterproof function in order to intercept the passage of water between interior and exterior sides of the body member 130.

The hole plug 110 is composed of a fitting portion 120 and a blocking portion 125. As seen in FIG. 5, the blocking portion 125 is attached to an upper end of the fitting portion 120. The fitting portion 120 and the blocking portion 125 are formed as an integral unit by the molding of a rigid synthetic resin. The fitting portion 120 is a cylindrical portion that is fitted into the hole 132 formed in the body member 130. As seen in the drawing, a desired number (e.g., four in this example) of engagement claws 121 are formed at the lower end of the fitting portion 120. In this embodiment, the four engagement claws 121 are circumferentially positioned at 90 degree intervals. However, any number of engagement claws may be formed so as to be circumferentially positioned over the entire periphery of the fitting portion 120, if necessary.
As shown in FIG. 4, the engagement claws 121 are formed by forming cutout portions or slots 126 in the fitting portion 120. Therefore, the engagement claws 121 can be independently radially flexed. More specifically, the engagement claws 121 are radially outwardly biased. Therefore, the engagement claws 121 engage the lower edge of the hole 132 of the body member 130, thereby preventing upward detachment of the fitting portion 120, as seen in FIG. 5.

The blocking portion 125 is the portion for blocking the hole 132 formed in the body member 130 and is formed as a disc-shaped member having an area larger than that of the hole 132. As shown in the drawing, the lower surface of the blocking portion 125 is formed with a central protrusion 140 and a circumferential seal member 111. Also, the upper end of the fitting portion 120 is integrally attached to the lower surface of the blocking portion 125 at a middle portion between the protrusion 140 and the seal member 111. The protrusion 140 is inherently formed when the blocking portion 125 is formed by the resin molding. The length of the protrusion 140 is smaller than that of the fitting portion 120.

The seal member 111 is composed of two annular seal strips 111a and 111b that are continuously formed. The seal strip 111a is circumferentially outwardly positioned, and the seal strip 111b is circumferentially inwardly positioned. The seal strips 111a and 111b are integrated at their base portions and are securely attached to the block portion 125 by an appropriate fixing means such as adhesion.
The outwardly positioned seal strip 111a is arranged so as to be radially outwardly directed and to be downwardly inclined toward the body member 130, and is positioned so as to have an appropriate pressing contact with the surface of the body member 130. To the contrary, the inwardly positioned seal strip 111b is arranged so as to be radially inwardly directed and to be downwardly inclined toward the body member 130, and is positioned so as to have an appropriate pressing contact with the surface of the body member 130. That is, the seal strips 111 a and 111 b are arranged so as to be radially oppositely directed.
The seal strips 111a and 111b constituting the seal member 111 are formed of a material that can provide a sealing function. For example, they may be formed of a rubber material or a resin material such as an elastomer.

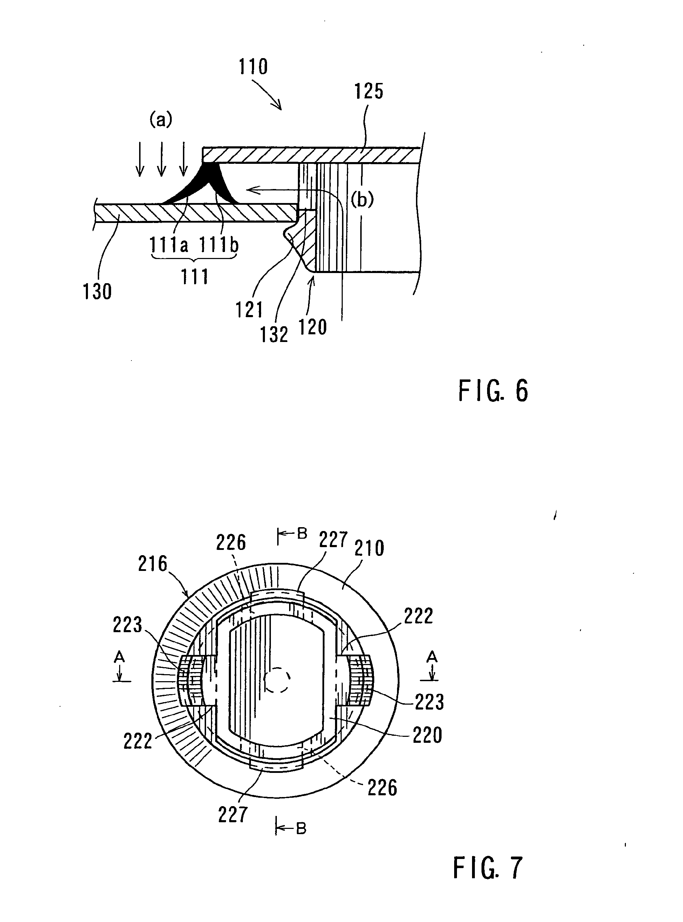

Next, the sealing function of the hole plug 110 of this embodiment constructed as described above will be described with reference to FIG. 6. FIG. 6 is an enlarged view of the left-hand side of FIG. 5, which illustrates a cross-sectional view of the hole plug 110.
First, with regard to water that enters from the outer side of the body member 130 toward the inner side (i.e., from the upper side toward the lower side as seen in the drawing). For water that enters in a direction indicated shown by the arrows (a) a sealing function and waterproof function can be performed by means of the outwardly positioned seal strip 111 a of the seal member 111. That is, when the water enters in the direction shown by the arrows (a), the water pressure of the water may act on the outer surface of the seal strip 111a so that the pressing contact force between the seal strip 111a and the body member 130 can be increased. As a result, the water entering in the direction shown by the arrows (a) can be prevented by the seal strip 111a so that the hole plug 110 may provide a sufficient waterproof function.

Next, with regard to water that enters from the inner side of the body member 130 toward the outer side (i.e., from the lower side toward the upper side as seen in the drawing). For water that enters in a reverse direction indicated shown by the arrows (b) a sealing function and waterproof function can be performed by means of the inwardly positioned seal strip 111b of the seal member 111. That is, when the water enters in the direction shown by the arrows (b), the water pressure of the water may act on the outer surface of the seal strip 111b so that the pressing contact force between the seal strip 111b and the body member 130 can be increased. As a result, the water entering in the direction shown by the arrows (b) can also be prevented by the seal strip 111b so that the hole plug 110 may provide a sufficient waterproof function.
That is, according to the hole plug 110 of this embodiment, a waterproof function is provided with respect to water that enters in both directions indicated by the arrows (a) and (b), i.e., water that enters from each of the inner and outer sides of the body member 130.

In this embodiment, as in the prior art, the engagement claws 121 of the fitting portion 120 unremovably engage the hole 132. Therefore, a pressing contact force is generated between the seal strips 111a and 111b and the surface of the body member 130, thereby producing a sealing function. As a result, more specifically, the waterproof function of the seal member 111 is a combination of these two seal functions.

In this way, according to the hole plug 110 of this embodiment, which is attached by fitting the hole plug 110 into the hole 132 formed in the body member 130, the seal member 111 can prevent water from entering through the hole 132 from both of the outer and inner sides of the body member 130. Therefore, the seal member 111 can effectively provide a two-way waterproofing function.
Further, the seal member is composed of the two seal members. One of the seal strips can prevent water from entering from one side to the other side of the body member 130. Conversely, the other of the seal strips can reliably prevent water from entering from the other side to one side of the body member 130. As a result, the two seal members can effectively provide a waterproof function that can prevent water from entering from both sides.
Further, when the hole plug 110 is attached to the body member 130, it is possible to prevent water intrusion regardless of whether the hole plug is attached from the exterior or the interior of the vehicle. Therefore, there is no need to observe the attaching direction of the hole plug 110. As a result, workability for attaching the hole plug can be increased.

### Third Embodiment

A third detailed representative embodiment of the present invention is described with reference to the drawings.

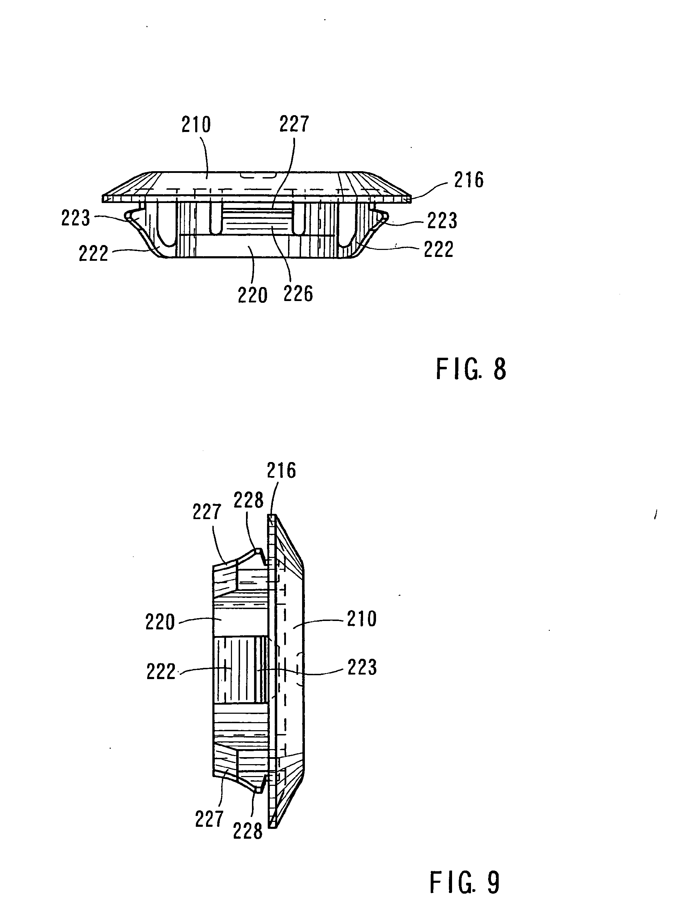

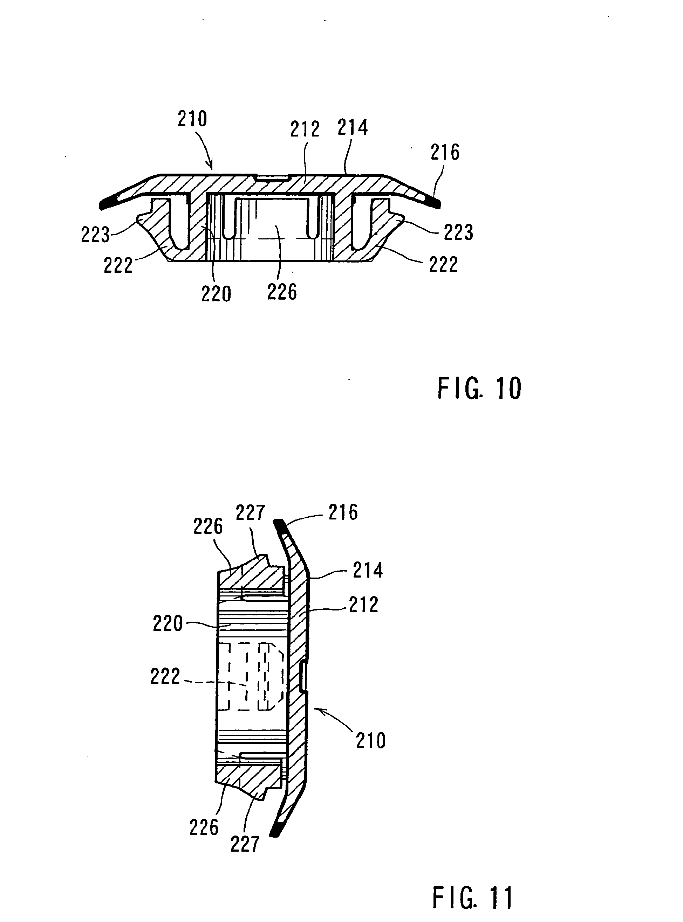

FIG. 7 is a front view of a hole plug. FIG. 8 is a plan view of FIG. 7. FIG. 9 is a right-hand side view of FIG. 7. FIG. 10 is a cross-sectional view taken along line A-A of **FIG**. **7.** FIG. 11 is a cross-sectional view taken along line B-B of FIG. 7.
As will be apparent from these drawings, the hole plug is composed of a seal portion 210 and a fitting portion 220. The seal portion 210 has a circular disc-shaped configuration. The fitting portion 220 has a cylindrical configuration that corresponds to the configuration of a through-hole 232 formed in a body member 230 described below.

The seal member 210 is formed by covering a core member 212 with a covering material 214. The core member 212 is formed from a rigid synthetic resin such as polypropylene (PP). Conversely, the covering material 214 is formed from a flexible synthetic resin such as elastomer resin. That is, the seal portion 210 has a structure in which the entire surface of the rigid core member 212 is covered with a thin flexible covering material 214 (FIGS. 10 and 11). It should be noted that an edge portion 216, i.e., an outer peripheral edge of the seal portion 210, is formed from only the flexible covering material 214.

The fitting portion 220 is integrally formed with the core member 212. Therefore, the fitting portion 220 is also formed from the rigid synthetic resin. The outer side portion of the fitting portion 220 is integrally formed with engagement claws 222 and 226 that are respectively positioned at four positions, i.e., two positions on the right and left and two positions on the front and rear in FIG. 7. As will be apparent from FIGS. 8 and 10, the right and left engagement claws 222 in FIG. 7 protrude outwardly with a curvature from the end portion of the fitting portion 220. Thus, the engagement claws 222 have a desired flexibility. The engagement claws 222 are respectively formed with outwardly projecting engagement portions 223. The engagement portions 223 are positioned near the forward ends of the engagement claws 222 and further protrude outwardly therefrom. Conversely, as will be apparent from FIG. 11, the front and rear engagement claws 26 in FIG. 7 are connected to the fitting portion 220 at the end portions thereof. In other words, the engagement claws 226 are formed by forming cutout portions or slots in the fitting portion 220. Therefore, the engagement claws 226 have a desired flexibility. The engagement claws 226 are also respectively formed with outwardly projecting engagement portions 227.

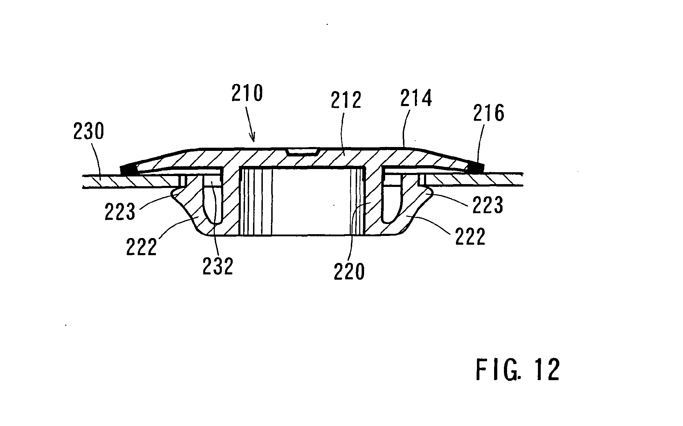

FIG. 12 is a cross-sectional view of the hole plug that is in use. In this drawing, the through-hole 232 corresponds to one of the through-holes that are formed in the body member 230 (e.g., a vehicle body) thereof and is otherwise left open without being used. The hole plug is intended to be inserted into the through-hole 232 for waterproofing and dustproofing.
In order to seal the through-hole 232, the fitting portion 220 of the hole plug is inserted into the through-hole 232 from the outer surface side of the body member 230. As a result, the engagement claws 222 and 226 pass through the through-hole 232 while being flexed inwardly so that the respective engagement portions 223 and 227 engage the peripheral edge of the through-hole 232 on the inner surface of the body member 230.

The dimension of the fitting portion 220 has a size that permits it to easily fit into the through-hole 232. Also, the engagement claws 222 and 226 can easily and independently flex. Therefore, the fitting portion 220 can be inserted into the through-hole 232 with a small force. Further, since the engagement claws 222 and 226 are formed from a rigid synthetic resin, when the engagement portions 223 and 227 engage the inner surface of the body member 230 as described above, an actual crisp feeling of engagement can be obtained. In addition, the hole plug can be reliably attached to the body member 230 with a sufficient retaining force.
Although, the right and left engagement claws 222 and the front and rear engagement claws 226 in FIG. 7 are different from each other, such a difference in shape is not essential in function. Therefore, it is naturally possible to unify the shape of the engagement claws 222 and 226 to either of the individual shapes.

In a condition in which the fitting portion 220 has been thus fitted into the through-hole 232, the seal portion 210 of the hole plug is being pressed against the outer surface of the body member 230 around the through-hole 232. In particular, because the edge portion 216 of the seal portion 210 is formed from only the soft covering material 214, the edge portion 216 has good adhesion with the outer surface of the body member 230. Therefore, the hole plug may have good waterproof and dustproof performances. Further, although the edge portion 216 is formed from only the covering material 214, it is possible to form the edge portion 216 from the core member 212 and the covering material 214, and to design the hole plug such that the covering material 214 of the edge portion 216 has a thickness greater than the covering material 214 of the main portion.

As shown in FIGS. 10 and 11, the covering material 214 is only provided to the portion in which waterproof or dustproof function is required. The hole plug of this embodiment is, for example, formed by filling a molding die with a flexible synthetic resin (the covering material 214), and then filling the molding die with a rigid synthetic resin (the core material 212). In this forming method, it may be impossible to define the boundary between the portion of the core member 212 that is covered with the covering material 214 and the portion thereof that is not covered with the covering material 214. However, this boundary is not a very important factor. What is important is that the core member 212 is covered by the covering material 214 at least in the seal portion 210. Further, the fitting portion 220 and the engagement claws 222 and 226 may optionally be covered with the covering material 214.

Various changes and modifications may be made to the three embodiments described above.
First, in the first embodiment, the thickened portion 21a is formed at the peripheral edge portion 21 of the cover portion 20. However, the thickened portion can be formed in the vicinity of the peripheral edge portion in consideration of particular design properties. In this case also, it is possible to maintain the size and configuration of the peripheral edge portion.
Further, the side portion 23 of the cover portion 20 is formed with the thinned portion 23a as the elastic force imparting means. However, instead, the side portion of the cover portion may be partially formed with cutout portions so that concentration of the external force (stress concentration) can occur. In addition, it is possible to change the offset position of the thickened portion that is applied with the external force so that a large bending stress is exerted on the side portion.
Further, in the first embodiment, the through-hole 41 has a circular shape, and the hole plug 10 is shaped so as to correspond to the shape of the through-hole. However, the through-hole may have a rectangular or triangular shape. Naturally, in such a case, the shape of the attaching portion and the cover portion is modified so as to correspond to the shape of the through-hole.
Moreover, in the second embodiment, the hole 132 formed in the body member 130 has a circular shape. However, the hole 132 may have a rectangular shape. Similarly, the seal members 111a and 111b of the seal member 111 have a circular shape. Naturally, the seal members 111a and 111b can be modified so as to correspond to the shape of the hole 132. Further, it should be noted that the seal members must be continuously formed regardless of the shape thereof.

## Claims

1. A hole plug for closing a through-hole formed in a compartment wall, comprising:
an attaching portion formed from a synthetic resin, the attaching portion can be inserted into the through-hole so as to engage one surface of the compartment wall; and
a cover portion integrated with the attaching portion at a central portion thereof, the cover portion having a size and shape that can enclose the through-hole and having a peripheral edge portion that can closely contact the other surface of the compartment wall,
wherein the cover portion has a configuration maintaining means that is formed in the peripheral edge portion thereof or in a vicinity of the peripheral edge portion and that can maintain a size and configuration of the peripheral edge portion when an external force is applied to the cover portion, and wherein the cover portion has an elastic force imparting means that is formed between the configuration maintaining means and the central portion integrated with the attaching portion and that can undergo elastic buckling deformation when the external force is applied thereto, the peripheral edge portion of the cover portion being capable to closely contact the other surface of the compartment wall by means of the elastic force imparting means.

2. The hole plug according to claim 1, wherein the cover portion is formed of elastomer, and wherein a portion formed with the configuration maintaining means has a thickness greater than a portion formed with the elastic force imparting means.

3. A hole plug according to claim 2, wherein the thickened portion formed of elastomer and formed with the configuration maintaining means has a double seal structure having a V-shaped cross-sectional configuration.
